**Europäisches Patentamt**

**European Patent Office**

**Office européen des brevets**

(19)

(11) Veröffentlichungsnummer : **0 184 994 B2**

(12)
# NEUE EUROPÄISCHE PATENTSCHRIFT

(45) Veröffentlichungstag der neuen Patentschrift :
**19.11.92 Patentblatt 92/47**

(51) Int. Cl.$^5$ : **B05D 1/06,** B05B 5/08

(21) Anmeldenummer : **85810583.6**

(22) Anmeldetag : **09.12.85**

(54) **Pulverabsaugvorrichtung.**

(30) Priorität : **13.12.84 CH 5927/84**
**25.10.85 CH 4599/84**

(43) Veröffentlichungstag der Anmeldung :
**18.06.86 Patentblatt 86/25**

(45) Bekanntmachung des Hinweises auf die
Patenterteilung :
**18.05.88 Patentblatt 88/20**

(45) Bekanntmachung des Hinweises auf die
Entscheidung über den Einspruch :
**19.11.92 Patentblatt 92/47**

(84) Benannte Vertragsstaaten :
**AT BE CH DE FR GB IT LI NL SE**

(56) Entgegenhaltungen :
**EP-A- 0 093 083**
**CH-A- 355 083**
**DD-A- 15 510**
**DE-A- 3 002 077**

(56) Entgegenhaltungen :
**DE-A- 3 028 588**
**US-A- 2 301 617**
**US-A- 3 994 532**
**US-A- 4 265 572**
**US-A- 4 378 728**
**Prospektblatt "Resicoat" (mit Datumstempel**
**31.10.59)**
**Chemische Technologie (1950), S. 60**
**Photo eines Fluidbodens (ohne nähere Be-**
**zeichnung)**

(73) Patentinhaber : **Frei, Siegfried**
**Sammelbühlstrasse**
**CH-9053 Teufen (CH)**

(72) Erfinder : **Frei, Siegfried**
**Sammelbühlstrasse**
**CH-9053 Teufen (CH)**

(74) Vertreter : **Gachnang, Hans Rudolf**
**Patentanwalt H.R. Gachnang Badstrasse 5**
**Postfach**
**CH-8501 Frauenfeld (CH)**

EP 0 184 994 B2

**Beschreibung**

Die Erfindung betrifft eine Pulversabsaugvorrichtung gemäß dem Oberbegriff des Patentanspruchs 1.

Das Pulver für die elektrostatische Pulverbeschichtung wird in den bekannten Anlagen in Pulverbehältern bereitgestellt, welche einen porösen Boden aufweisen, durch den das gesamte Pulver gelockert, d.h. fluidisiert, und absaugfähig gemacht wird und hernach mittels eines Saugrohres entfernt wird.

Das in Säcken oder Behältern angelieferte Pulver muß deshalb vorerst in diese speziellen Fluidiserbehälter umgefüllt, z.B. umgeschüttet werden. Diese Arbeit ist aufwendig und verursacht häufig eine Verunreinigung der Umgebung und oft auch des Pulvers, da dieses beim Umschütten durch Reibung eine elektrostatische Aufladung erhält. Es ist deshalb auch nicht möglich, direkt aus den Transportbehältern die Pulverapplikationsanlage zu speisen.

Aus der US-A-2 301 617 ist eine Absaugvorrichtung für pulverisiertes, granuliertes oder in ähnlicher Weise zerkleinertes Material oder für verschiedene andere Schüttgüter mit kleiner Teilchengröße bekannt. Diese bekannte Absaugeinrichtung besitzt ein in seinem Mündungsbereich von einer oben und unten offenen Luftansaughülse umgebenes Absaugrohr, wobei konzentrisch zu der unteren ringförmigen Luftaustrittsöffnung der Luftansaughülse rund um diese herum ein mit Luftaustrittsöffnungen versehener, hohler Ring vorgesehen ist, dem intermittierend Druckluft zuführbar ist.

Hierdurch soll erreicht werden, daß das durch das Materialabsaugen vor der Absaugöffnung entstehende Loch durch das neben dem Loch befindliche Material aufgefüllt wird.

Eine zuverlässige Absaugung von verdichtetem und teilweise zusammenbackenden Lackpulver für das elektrostatische Beschichten ist mit einer derartigen Absaugvorrichtung nicht zu erreichen.

Bei einem bekannten Entladegerät für Schüttgut (CH-A-355 083) ist vor der Absaugöffnung eines senkrecht stehenden Absaugrohres ein durch eine neben dem Absaugrohr und parallel zu ihm verlaufende hohle Welle zu einer Drehbewegung angetriebenes, tellerartiges rundes Gehäuse vorgesehen, dessen Wände aus einem luftdurchlässigen Sintermetall bestehen. Das umlaufende Gehäuse, das an seinem Umfang auch sägezahnartig ausgebildet und mit Schaufeln versehen sein kann, lockert das Fördergut auf und führt es der Absaugöffnung zu. Durch die hohle Welle wird Druckluft in das Gehäuse eingeblasen, die durch dessen poröse Wände in das umgebende Fördergut eindringt, dieses auflockert und ein Gut-Luft-Gemisch im Bereich der Absaugöffnung des Absaugrohres erzeugt.

Auch dieses Entladegerät ist für das Fördern von Pulver für das elektrostatische Beschichten in einer Pulverlackieranlage nicht geeignet, weil durch das mechanische Rühren mittels des tellerartigen Gehäuses die einzelnen Pulverkörner, welche größtenteils eine für die elektrostatische Aufladung wichtige große gezackte Oberfläche aufweisen, abgeschliffen und abgerundet werden und so für eine einwandfreie Pulverlackierung nicht mehr brauchbar sind. Weiter zerbrechen hierbei viele Pulverpartikel, was wiederum zu Schwierigkeiten bei der Ausfilterung der mit diesen Teilchen beladenen Luft im Anschluß an den Lackiervorgang führt.

Da das tellerartige Gehäuse die Absaugöffnung weitgehend abdeckt, kann überwiegend nur mechanisch zugeführtes Fördergut abgesaugt werden.

Weiter ist das Einführen des tellerartigen Gehäuses von oben in das Schüttgut schwierig, weil eine Scheibe dem Absenken im Schüttgut einen hohen Widerstand entgegensetzt und das Absenken auch nicht durch die Druckluft wesentlich unterstützt werden kann, da diese am Ort des geringsten Widerstandes, d.h. oben und allenfalls noch an den Seiten des Gehäuses austreten wird.

Der Erfindung liegt die Aufgabe zugrunde, die Absaugung von Pulver für das elektrostatische Beschichten aus Transportbehältern ohne Fluidisierboden mit einfachen und wirtschaftlich verfügbaren Mitteln zu ermöglichen.

Diese Aufgabe wird durch die Pulverabsaugvorrichtung gemäß den Merkmalen des Patentanspruches 1 gelöst.

Druckluftschalldämpfer stellen deswegen ein einfaches und wirtschaftlich verfügbares Mittel dar, weil sie auf dem Markt zur Schalldämpfung von Druckluftwerkzeugen preiswert erhältlich sind, für die Zwecke der Erfindung also nicht besonders angefertigt werden müssen. Durch die Anordnung mehrerer Druckluftschalldämpfer neben dem Ende des Saugrohres in der Weise, daß sie sich bis unter das Niveau des Endes erstrecken, liegt unter und neben der Saugöffnung diffus strömende Luft vor, die das bei der elektrostatischen Beschichtung zu verwendende Pulver ohne eine Beeinträchtigung oder Zerstörung seiner Partikel in schonender Weise in einen fluidisierten Zustand versetzt, wodurch ein unmittelbares Absaugen zu einer Pulverapplikationsanlage gewährleistet ist.

Weitere Ausgestaltungen gehen aus den Unteransprüchen hervor.

Anhand eines illustrierten Ausführungsbeispieles wird die Erfindung näher erläutert. Es zeigt die einzige

Figur einen Behälter mit einer Absaugvorrichtung.

Damit Pulverbehälter 19 auch ohne eingebauten Fluidisierboden verwendet werden können, wird nach der Erfindung eine Absauglanze 69 vorgeschlagen, welche aus einem von oben durch eine Öffnung im Deckel in den Behälter 19 einsteckbaren Saugrohr 51 besteht, das an einer beispielsweise mit Pressluft betriebenen Saugvorrichtung 53 angeschlossen ist. Am unteren Ende 63 des Saugrohres 51 sind mehrere feinporige, mit Druckluft aus dem Netz 32 beaufschlagte Endstücke 55, z. B. Druckluftschalldämpfer, angeordnet, durch welche feinst verteilte Druckluft in den Bereich des Rohrendes 63 geleitet wird, die das in diesem Bereich des Behälters 19 befindliche Pulver 7 fluidisieren. Auf diese Weise kann das Pulver 7 leicht und ohne Rückstände abgesaugt verden (Figur). Wenn der Behälter 19 auf einen Vibrator (nicht dargestellt) gestellt wird, wird das Absaugen von Pulver, das durch die Lagerung und den Transport verfestigt worden ist, erleichtert.

Das Saugrohr 51 kann an einer Öffnung am Behälter 19 geführt sein und mit abnehmender Pulvermenge im Behälter 19 in diesen eindringen.

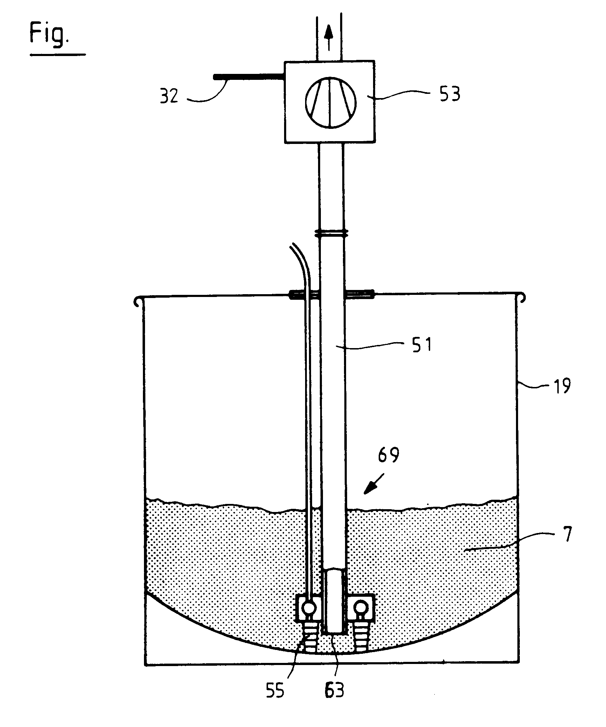

## Patentansprüche

1. Pulverabsaugvorrichtung zum Absaugen von Pulver (7) für das elektrostatische Beschichten in einer Pulverlackieranlage aus Behältern, wie Fässer, Säcke, Kisten etc., mit einem Saugrohr (51) und mit dem Ende (63) des Saugrohres (51) zugeordneten Luftzuführmitteln,
dadurch **gekennzeichnet**,
daß am Ende (63) des Saugrohres (51) neben diesem und sich bis unter das Niveau des Endes (63) erstreckend mehrere mit Druckluft beaufschlagbare feinporige Druckluftschalldämpfer (55) angeordnet sind, durch welche feinst verteilte Druckluft in den Bereich des Rohrendes (63) geleitet wird, so daß das Pulver (7) im Bereich der Ansaugstelle am Ende (63) des Saugrohres (51) fluidisierbar und durch das Saugrohr (51) absaugbar ist.

2. Pulverabsaugvorrichtung nach Anspruch 1, dadurch gekennzeichnet, dass das Saugrohr (51) in einer Öffnung am Behälter (19) axial geführt ist und mit abnehmender Pulvermenge im Behälter (19) in diesen weiter eindringbar angeordnet ist.

3. Pulverabsaugvorrichtung nach einem der Ansprüche 1 oder 2, dadurch gekennzeichnet, dass der Behälter (19) auf einem Vibrator stehend angeordnet ist.

## Claims

1. Powder exhauster for exhausting powder utilised for the electrostatic coating in a powder lacquering plant from containers, such as barrels, bags, cases, etc. having a suction pipe (51), and means for admitting air to the end (63) of the suction pipe (51), characterised in that next to the end (63) of the suction pipe and reaching below the end (63) a plurality of fine-pored silencers (55) for compressed air are disposed through which fine-dispensed air is directed into the area of the end (63) of the pipe (51) in order to fluidise the powder (7) in the suction region and to make it removable trough the suction pipe (51).

2. Powder exhauster according to claim 1, characterised in that the suction pipe (51) extends axially in an opening in the container (19) and is disposed so that it can penetrate further into the container (19) as the amount of powder in the container decreases.

3. Powder exhauster according to one of claims 1 or 2, characterised in that the container (19) is disposed so as to stand on a vibrator.

## Revendications

1. Dispositif d'aspiration de poudre destiné à l'aspiration de poudre prévue pour l'enduction électrostatique dans une installation de laquage à la poudre à partir de conteneurs tels que des fûts, des sacs, des caisses, etc., au moyen d'un tube d'aspiration (51), caractérisé en ce que plusieurs éléments d'extrémité (55), de fine porosité et soumis à de l'air comprimé sont disposés à l'extrémité (63) du tube d'aspiration, au moyen desquels la poudre (7) se trouvant dans la région de la position d'aspiration à l'extrémité (63) du tube d'aspiration (51) peut être fluidisée et aspirée par le tube d'aspiration (51).

2. Dispositif d'aspiration de poudre selon la revendication 1, caractérisé en ce que le tube d'aspiration (51) est guidé axialement dans une ouverture du conteneur (19) et peut être enfoncé plus avant dans ce dernier à mesure que diminue la quantité de poudre dans le conteneur (19).

3. Dispositif d'aspiration de poudre selon l'une des revendications 1 ou 2, caractérisé en ce que le conteneur (19) est monté sur un vibrateur.

Fig.